(19) Europäisches Patentamt
European Patent Office
Office européen des brevets

(11) Publication number: **0 129 825 B2**

(12) # NEW EUROPEAN PATENT SPECIFICATION

(45) Date of publication of the new patent specification: **27.09.95**

(51) Int. Cl.⁶: **C08L 71/12**, C08L 77/00, C08K 5/52, C08L 69/00, C08K 5/06, C08K 3/20

(21) Application number: **84106979.2**

(22) Date of filing: **18.06.84**

The file contains technical information submitted after the application was filed and not included in this specification

(54) **Modified blends of polyphenylene ether resin and a polyamide.**

(30) Priority: **28.06.83 US 508567**

(43) Date of publication of application: **02.01.85 Bulletin 85/01**

(45) Publication of the grant of the patent: **21.09.88 Bulletin 88/38**

(45) Mention of the opposition decision: **27.09.95 Bulletin 95/39**

(84) Designated Contracting States: **DE FR GB IT NL**

(56) References cited:
**EP-A- 0 046 040**
**WO-A-83/03834**
**DE-A- 2 228 072**
**DE-A- 2 659 304**
**DE-A- 2 752 383**
**FR-A- 2 451 386**
**FR-A- 2 504 715**
**GB-A- 2 054 623**
**US-A- 3 933 941**

**PATENT ABSTRACTS OF JAPAN, vol. 8, no. 114, 26 May 1984, page (C-225)(1551); & JP-A-59-27942**

**O. Olabisi et al., Polymer-Polymer Miscibility, 1979, Academic Press, p. 117ff**

(73) Proprietor: **GENERAL ELECTRIC COMPANY**
**1 River Road**
**Schenectady**
**New York 12305 (US)**

(72) Inventor: **Abolins, Visvaldis**
**15 Haddington Lane**
**Delmar**
**New York 12054 (US)**
Inventor: **Betts, Joseph Elwood**
**44 Park Lane**
**Westport**
**Connecticut 06880 (US)**
Inventor: **Holub, Fred Frank**
**2263 Preisman Drive**
**Schenectady**
**New York 12305 (US)**

(74) Representative: **CATHERINE, Alain et al**
**Bureau D.A. CASALONGA-JOSSE**
**Morassistrasse 8**
**D-80469 München (DE)**

**EP 0 129 825 B2**

## Description

The polyphenylene ether resins (also sometimes referred to as polyphenylene oxide resins) are a well known family of engineering thermoplastics which are characterized by good thermal, mechanical and electrical properties and which can be prepared into articles of various shapes and sizes by extrusion, molding and other procedures.

Despite the many commercial applications possible for polyphenylene ether resins, their use has been somewhat restricted because of relatively poor flow properties which can cause difficulties during extrusion operations. A further drawback is that they are poor in solvent resistance after molding, and therefore, their use for certain applications has been further limited.

Proposals have been made for upgrading the properties of polyphenylene ethers by combining them with other polymers. U.S.-A-3,379,792, teaches that the addition of a polyamide improves the flow properties of a polyphenylene oxide. The blends are limited to up to only about 20% by weight of the polyamide, however. The patentee states that when the polyamide concentration exceeds this amount, appreciable losses in other physical properties occur. Apart from these teachings, it is also known elsewhere in the art that polyphenylene oxide (ether) resins and polyamide resins are not completely compatible with each other over the full range of relative proportions, and that poor mechanical properties and phase separation occur if attempts are made to add too large an amount of the polyamide.

U.S.-A-4,338,421 discloses that compositions containing 70 to 5% by weight of a polyphenylene oxide and 30 to 95% by weight of a polyamide can be formed by melt blending the two, and the resultant blend is characterized by improvement in both the solvent resistance and the impact strength. The patent states the belief that some graft interaction takes place between the polyphenylene oxide and the polyamide under those conditions, thus resulting in good interfacial adhesion and non-phase separation between the two resins.

EP-A-46040 describes a highly heat-resistant thermoplastic resin composition having high oil resistance which comprises (1) a polyphenylene ether resin, (2) a copolymer comprising a vinyl aromatic compound and an $\alpha,\beta$-unsaturateddicarboxylic acid anhydride or a copolymer comprising a vinyl aromatic compound and an imide compound of an $\alpha,\beta$-unsaturated dicarboxylic acid, and (3) a polyamide resin and, additionally,- if desired - (4) an impact resistant reinforcing agent. Additionally, the composition may include a phosphoric acid ester as flame retardant.

It has been found that compatibility between a polyphenylene ether resin, an elastomeric material and a relatively large amount of polyamide resin is achieved if just a minor amount of an organic phosphate is added.

As an additional benefit, the flame retardancy of the compositions can easily be enhanced by selecting the organic phosphate from among those materials known to provide this function.

As a further aspect of the invention, the flame retardancy can be improved even further by use of an optional feature, comprising the presence in the compositions of a stable, brominated flame retardant material, for example, a relatively non-volatile bis-bromophenoxy alkane or bromine containing polycarbonate resin.

The compositions can be prepared without the need for melt blending, as is required with US-A-4,338,421 compositions referred to above. Good compatibility between the polyphenylene ether, the elastomeric material and the polyamide is achievable using a variety of preparation methods.

According to the invention there is provided a thermoplastic composition comprising an admixture of (a) 99 to 30 parts by weight of a polyamide resin based on 100 parts of (a) and (b) together; (b) a polyphenylene resin; (c) an elastomeric material selected from polystyrene-polybutadiene block copolymers, polystyrene-polyisoprene block copolymers, polystyrene-polybutadiene-polystyrene block copolymers, polystyrene-polyisoprene-polystryene block copolymers, and polystyrene-polyethylene/polybutylene-polystyrene block copolymers; (d) 1 to 20 parts by weight of an organic phosphate per 100 parts by weight of (a) and (b), and optionally

(e) a stable flame retardant brominated material with or without a synergistic agent,

(f) a filler, and

(g) one or more additives selected from plasticizers, antioxidants, stabilizers, reinforcing agents, pigments, dyes and other impact modifiers.

Within the invention summarized above, there are certain composition components which are preferred for the practice of this invention.

The polyphenylene ether resin is desirably a homo- or copolymer having units of the formula

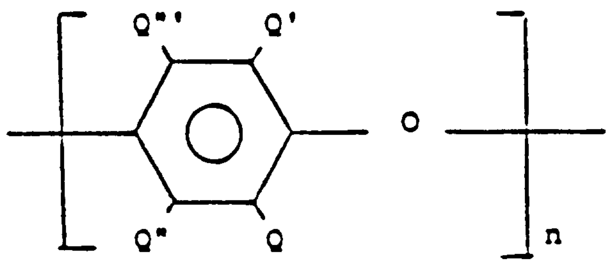

wherein Q, Q', Q" and Q"', are independently selected from the group consisting of hydrogen, halogen, hydrocarbon radicals, halohydrocarbon radicals, hydrocarbonoxy radicals, and halohydrocarbonoxy radicals; and n represents the total number of monomer units and is an integer at least about 20, and preferably at least 50.

In general, the polyphenylene ether resins are self-condensation products of monohydric monocyclic phenols with oxygen in the presence of complex metal catalysts, with molecular weight being controlled by reaction time, longer times providing a higher average number of repeating units. Particular procedures are known to those skilled in the art and are described in the patent literature, including U.S.-A-3,306,874; 3,306,875; 3,257,357 and 3,257,358.

Illustrative polymers which can be produced by such procedures and which are within the above general formula are: poly(2,6-dilauryl-1,4-phenylene)ether: poly(2,6-diphenyl-1,4-phenylene)ether; poly(2,6-dimethoxy-1,4-phenylene)ether: poly(2,6-diethoxy-1,4-phenylene)ether; poly(2-methoxy-6-ethoxy-1,4-phenylene)ether; poly(2-ethyl-6-stearyloxy-1,4-phenylene)ether; poly(2,6-dichloro-1,4-phenylene)ether; poly-(2-methyl-6-phenyl-1,4-phenylene) ether; poly(2,6-dibenzyl-1,4-phenylene)ether; poly(2-ethoxy-1,4-phenylene)ether; poly(2-chloro-1,4-phenylene) ether; poly(2,6-dibromo-1,4-phenylene)ether; and the like. Examples of polyphenylene ethers corresponding to the above formula can be found in the above referenced patents.

Also included are polyphenylene ether copolymers, such as copolymers of 2,6-dimethylphenol with other phenols, for example, with 2,3,6-trimethylphenol or 2-methyl-6-butylphenol, etc.

For purposes of the present invention, an especially preferred family of polyphenylene ethers include those having alkyl substitution in the two positions ortho to the oxygen ether atom, i.e., those of the above formula wherein Q and Q' are alkyl, most preferably having from 1 to 4 carbon atoms. Illustrative members of this class are: poly(2,6-dimethyl-1,4-phenylene)ether: poly(2,6-diethyl-1,4-phenylene)ether; poly(2-methyl-6-ethyl-1,4-phenylene)ether; poly(2-methyl-6-propyl-1,4-phenylene) ether; poly(2,6-dipropyl-1,4-phenylene)-ether; poly(2-ethyl-6-propyl-1,4-phenylene)ether; and the like.

The most preferred polyphenylene ether resin for purposes of the present invention is poly(2,6-dimethyl-1,4-phenylene)ether.

The compositions also contain, as indicated, a polyamide. The term "polyamide" is used throughout this disclosure in its conventional sense to denote a polymeric condensation product which contains recurring aromatic and/or aliphatic amide groups as integral parts of the main polymer chain, such products being known generically as "nylons". In general, the polyamides useful in this invention are those having linkages of the formula

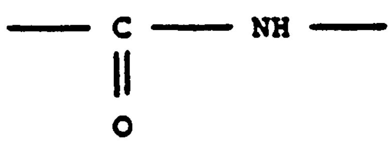

in the main chain. These include polymers formed from the condensation of diamines and dibasic acids, from the self-condensation of amino acids, and by the polymerization of lactams.

Procedures for preparing polyamides are well known in the art. Details of their formation can be found in "Polyamides", Encyclopedia of Polymer Science and Technology; John Wiley & Sons, Inc., Vol. 10, pages 487 to 491 (1969).

Usually, the polyamides useful in the practice of this invention can be obtained by polymerizing a monoaminocarboxylic acid or internal lactam thereof having at least two carbon atoms between the amino

and carboxylic acid groups; or by polymerizing substantially equimolar proportions of a diamine which contains at least two carbon atoms between the amino groups and a dicarboxylic acid; or by polymerizing a monoamino carboxylic acid or an internal lactam thereof together with substantially equimolar proportions of a diamine and a dicarboxylic acid. These are not the only means which can be used, however. Examples of the monoaminocarboxylic acid or lactam include compounds containing from 2 to 16 carbon atoms between the amino and carboxylic acid groups (the carbon atoms forming a ring with the amide group in the case of a lactam). As particular examples, mention is made of ϵ-aminocaproic acid, butyrolactam, picalolactam, caprolactam, caprylactam, enantholactam, undecanolactam, dodecanolactam and 3- and 4-amino benzoic acids.

Examples of the diamine are those of the general formula $H_2N(CH_2)_nNH_2$, in which n is an integer of from 2 to 16, such as trimethylenediamine, tetramethylenediamine, pentamethylenediamine, octamethylenediamine, decamethylenediamine, dodecamethylenediamine, hexadecamethylenediamine, and especially hexamethylenediamine.

C-alkylated diamines, e.g., 2,2-dimethylpentamethylenediamine and 2,2,4- and 2,4,4-trimethylhexamethylenediamine, are further examples. Other diamines which may be mentioned as examples are aromatic diamines, e.g., p-phenylenediamine, 4,4'-diaminodiphenyl sulphone, 4,4'-diaminodiphenyl ether and 4,4'-diaminodiphenylmethane; and cycloaliphatic diamines, for example, diaminodicyclohexylmethane.

The dicarboxylic acids may be aromatic, for example, isophthalic and terephthalic acids. Preferred dicarboxylic acids are of the formula HOOC-Y-COOH wherein Y represents a divalent aliphatic radical containing at least 2 carbon atoms, and examples of such acids are sebacic acid, octadecanedioic acid, suberic acid, azelaic acid, undecanedioic acid, glutaric acid, pimelic acid, and especially adipic acid.

Illustratively, the following polyamides may be incorporated in the thermoplastic polymer blends of the invention:

Homopolymers

polyhexamethylene adipamide (nylon 6:6)
polypyrrolidone (nylon 4)
polycaprolactam (nylon 6)
polyheptolactam (nylon 7)
polycaprylactam (nylon 8)
polynonanolactam (nylon 9)
polyundecanolactam (nylon 11)
polydodecanolactam (nylon 12)
polyhexamethylene azelaiamide (nylon 6:9)
polyhexamethylene sebacamide (nylon 6:10)
polyhexamethylene isophthalamide (nylon 6:ip)
polymetaxylylene adipamide (nylon MSD:6)
polyamide of hexamethylenediamine and n-dodecanedioic acid (nylon 6:12)
polyamide of dodecamethylenediamine and n-dodecanedioic acid (nylon 12:12)

Copolymers

hexamethylene adipamide/caprolactam (nylon 6:6/6)
hexamethylene adipamide/hexamethylene-isophthalimide (nylon 6:6/6ip)
hexamethylene adipamide/hexamethylene-terephthalamide (nylon 6:6/6T)
trimethylhexamethylene oxamide/hexamethylene oxamide (nylon trimethyl-6:2/6:2)
hexamethylene adipamide/hexamethylene-azelaiamide (nylon 6:6/6:9)
hexamethylene adipamide/hexamethylene-azelaiamide caprolactam (nylon 6:6/6:9/6).

The average molecular weight of the polyamide used in the compositions of this invention can range from 1.000 to 20,000 or higher (number average).

Special mention is made herein of the polyamides known as nylon 6 (a polycaprolactam), nylon 11 (a polyundecanolactam), and nylon 6:6 (a polyhexamethylene adipamide).

The polyphenylene ether homopolymer or copolymer and the polyamide resin can be present in virtually any desired proportions, between 1 and 70 parts of polyphenylene ether resin, and correspondingly, between 99 parts and 30 parts of polyamide, based on 100 parts by weight of the two. Compatible admixture of these resins with this broad range of amounts is enabled by the co-presence of a minor amount of an organic phosphate compound, as explained.

Preferred for use as the organic phosphate compound in the compositions of this invention are aromatic compounds having the formula

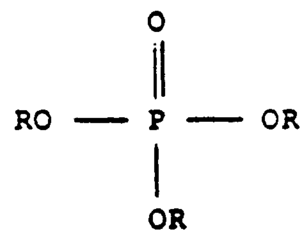

wherein R is the same or different and can be alkyl, cycloalkyl, aryl, alkyl substituted aryl, halogen substituted aryl, aryl substituted alkyl, halogen, and combinations of any of the foregoing, provided that at least one R is aryl.

Typical examples include phenylbisdodecyl phosphate, phenylbisneopentyl phosphate, phenyl-bis (3,5,5'-trimethylhexyl phosphate), ethyldiphenyl phosphate, 2-ethyl-hexyldi(p-tolyl)phosphate, bis-(2-ethylhexyl)p-tolylphosphate, tritolyl phosphate, bis-(2-ethylhexyl)phenyl phosphate, tri-(nonylphenyl)phosphate, di(dodecyl)p-tolyl phosphate, tricresyl phosphate, triphenyl phosphate, dibutylphenyl phosphate, 2-chloroethyldiphenyl phosphate, p-tolyl bis-(2,5,5'-trimethylhexyl)phosphate, 2-ethylhexyldiphenyl phosphate, and the like. The preferred phosphates are those where each R is aryl. Especially preferred is triphenyl phosphate, either unsubstituted or substituted, e.g., isopropylated triphenyl phosphate.

Alternatively, the aromatic phosphate can be a di- or polyfunctional compound or polymer having the formula

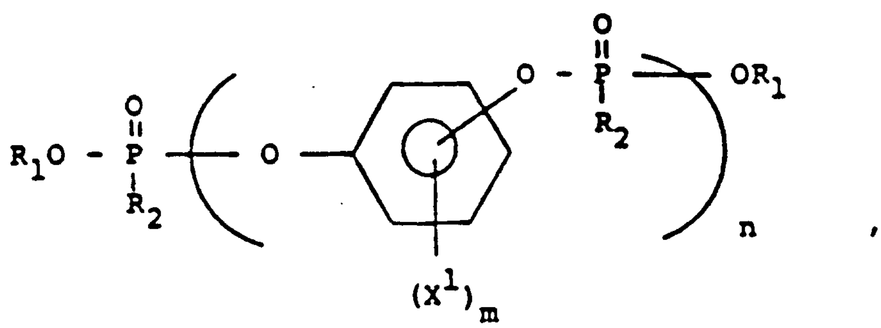

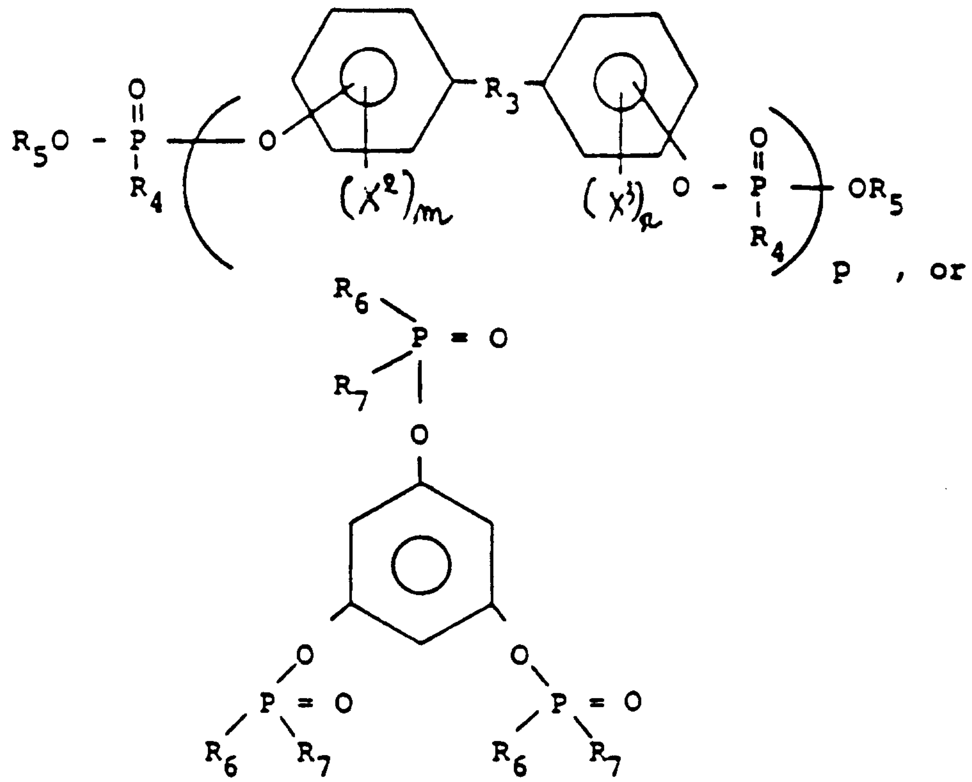

, or

and mixtures thereof, wherein $R_1$, $R_3$ and $R_5$ are, independently, hydrocarbon; $R_2$, $R_4$, $R_6$ and $R_7$ are, independently, hydrocarbon or hydrocarbonoxy; $X^1$, $X^2$ and $X^3$ are halogen, m and r are 0 or integers from 1 to 4, and n and p are from 1 to 30.

Examples include the bis diphenyl phosphates of resorcinol, hydroquinone or bisphenol-A, respectively, or their polymeric higher molecular weight counterparts.

These phosphates and methods of their preparation are described in British Patent No. 2,043,083.

Minor amounts of the organic phosphate, ranging from 1 to 20 parts by weight per 100 parts of polyphenylene ether and polyamide combined, will in most cases be sufficient to achieve the desired compatibilizing effect.

In instances where a degree of flame retardancy enhancement is desired, the organic phosphate can be selected from among normally flame retardant materials, e.g., triphenyl phosphate. This can be used alone or in conjunction with other materials which function as flame retardant agents. Of particular interest are stable brominated compounds having a low volatility in the temperature range 100-150 °C., e.g., brominated bis-phenoxy alkanes of the formula

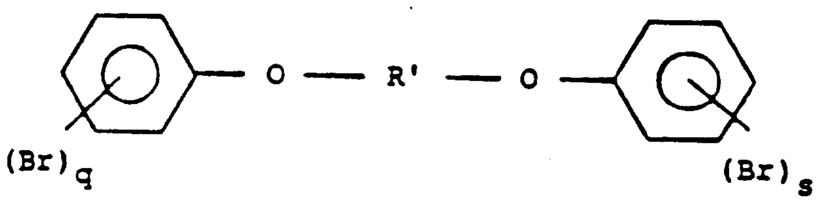

where R' is alkylene, straight or branched, having from 1 to 10 carbon atoms, and q and s represent the total number of bromine atoms on each ring and are, independently, integers from 1 to 5.

Examples of the above are 1,2-bis(2,4,6-tribromophenoxy)ethane; 1,3-bis(2,4,6-tribromophenoxy)-propane; 1,4-bis(2,4,6-tribromophenoxy)butane; 2,2-bis(4-bromophenoxy)propane;and 1,2-bis(2,3,4,5,6-pentabromophenoxy) ethane. These are available commercially or can be prepared by use of procedures described in the patent literature, including U.S-A-4,016,138.

Also useful are flame retardant brominated polymers, including those which are described in U.S-A-3,334,154 and 3,833,685.

Preferably, these are aromatic carbonate copolymers having units of the formula:

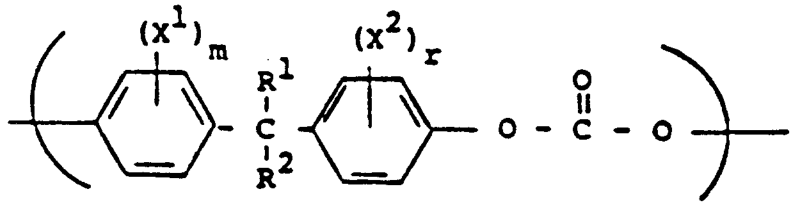

in which $R^1$ and $R^2$ are hydrogen, (lower) alkyl or phenyl, $X^1$ and $X^2$ are bromo or chloro, and m and r are from 1 to 4, and units of the formula:

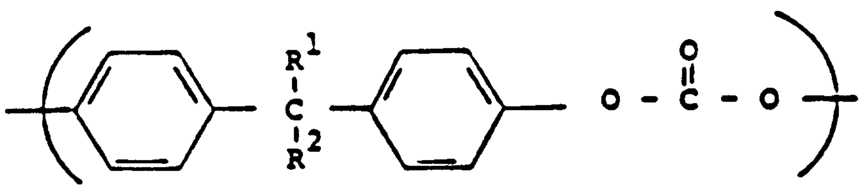

in which $R^1$ and $R^2$ are as defined above.

Especially preferred are oligomeric tetrabromobisphenol-A polycarbonates chain stopped with tribromophenol.

Amounts of between 1 and 20 parts by weight of this optional additional component, based on 100 parts of total resin, are preferred.

The compositions of the present invention also include an elastomeric material selected from polystyrene-polybutadiene block copolymers, polystyrene-polyisoprene block copolymers, polystyrene-polybutadiene-polystyrene block copolymers, polystyrene-polyisoprene-polystyrene block copolymers, and polystyrene-polyethylene/polybutylene-polystyrene block copolymers.

The compositions of the invention can also include one or more additives conventionally employed with polyphenylene ether resins to improve the chemical and physical properties of the molded articles. The additives can be selected from among placticizers, antioxidants, stabilizers, fillers e.g. mineral fillers, (e.g., clay), reinforcing agents (e.g., glass fibers), pigments, dyes, and other impact modifiers, and so forth. In the typical case, the additive or additives are included in minor but effective amounts varying between 1 and 50% by weight, or more, of the total composition.

Preparation of the compositions may be accomplished by milling the ingredients on a roll mill at a temperature of 380 (193°C) to 450°F (232°C) and molding at 440 (227°C) to 460°F (238°C). Other procedures are possible, however, as shown in some of the examples

The following examples illustrate the invention. They are intended to show preferred or best embodiments only and not as a limitation on the scope. All parts are by weight.

EXAMPLES 1-3

The compositions were prepared by milling the ingredients at 380-390°F (193-199°C) and molding the milled material for ten minutes at 460°F (238°C).

TABLE 1

| Ingredients | 1 | 2 | 3 |
|---|---|---|---|
| Polyamide resin (nylon 11) | 50 | 50 | 50 |
| * Poly(2,6-dimethyl-1,4-phenylene ether) resin | 40 | 40 | 40 |
| * Isopropylated triphenyl phosphate | 10 | 10 | 10 |
| Styrene-ethylene/butylene-styrene block copolymer | 10 | 10 | 10 |
| Tetrabromobisphenol-A oligomeric polycarbonate | 10 | 10 | 20 |
| Bis diphenyl phosphate of resorcinol | -- | 10 | 10 |
| Antimony oxide | -- | 5 | -- |
| Properties | | | |
| Horizontal propagation, in inches,(mm) after 30 seconds | ¼ inch(6.35) | ¼ inch(6.35) | ¼ inch (6.35) |
| Horizontal Burn Test, 1/8 inch (3.175mm) specimen | ND | ND | ND |
| Vertical Burn Test, 1/8 inch (3.175mm) specimen | | | |
| Drip characteristics | ND,ND | ND,ND | ND,ND |
| Seconds to quench | | | |
| 1st ignition | 4,4 | 1,1 | 1,1 |
| 2nd ignition | >30,>30 | 10,8 | 3,3 |

* Pre-extruded together at 500-600°F(260-316°C).
ND = No Drip

EXAMPLES 4-6

The compositions noted below were prepared by blending the ingredients for thirty seconds on a Henschel mixer and extruding the blend at 500 °F (260 °C) on a single screw extruder.

TABLE 2

| Ingredients | 4* | 5 | 6 |
|---|---|---|---|
| Polyamide resin (nylon 6:6) | 50 | 50 | 50 |
| Poly(2,6-dimethyl-1,4-phenylene ether) resin | 40 | 40 | 40 |
| Styrene-ethylene/butylene-styrene block copolymer | 10 | 10 | 10 |
| Tetrabromobisphenol-A oligomeric polycarbonate | 10 | 10 | 10 |
| Bis diphenyl phosphate of resorcinol | -- | 10 | 10 |
| Antimony oxide | -- | -- | 5 |
| Properties | | | |
| Horizontal propagation, in inches (mm), after 30 seconds | ½ inch (6.35) | ¼ inch (6.35) | NP |
| Horizontal Burn Test, 1/8 inch (3.175mm) specimen | ND | ND | ND |

* comparative example
ND = No Drip
NP = No Propagation

EXAMPLES 7-9

The compositions noted below were prepared by milling the ingredients at 440-450°F (227-232°C) in the case of Example and at 400-410°F (204-210°C) in the case of Examples and , and molding the milled material at 460°F (238°C) for ten minutes in each case.

TABLE 3

| Ingredients | 7 | 8 | 9 |
|---|---|---|---|
| Polyamide resin (nylon 11) | 50 | 50 | 50 |
| *Poly (2,6-dimethyl-1,4-phenylene ether) resin | 50 | 50 | 50 |
| Styrene-ethylene/butylene-styrene block copolymer | 20 | 20 | 20 |
| Tetrabromobisphenol-A oligomeric polycarbonate | -- | -- | 30 |
| *Bis diphenyl phosphate of resorcinol | 10 | 10 | 10 |
| Antimony oxide | -- | 5 | 5 |
| Properties | | | |
| Horizontal propagation, in inches (mm), after 30 seconds | ¼ inch (6.35) | ¼ inch (6.35) | ¼ inch (6.35) |
| Horizontal Burn Test, 1/8 inch (3.175mm) specimen | ND | ND | ND |

* pre-extruded together at 490 to 570°F.(254 to 299°C)
ND = No Drip

EXAMPLE 10

The ingredients were extruded at 480-510°F (249-266°C) and molded for ten minutes at 500°F (260°C).

TABLE 4

| Ingredients | |
|---|---|
| Polyamide resin (nylon 11) | 50 |
| Poly(2,6-dimethyl-1,4-phenylene ether) resin | 50 |
| Styrene-ethylene/butylene-styrene block copolymer | 20 |
| Tetrabromobisphenol-A oligomeric polycarbonate | 30 |
| Bis diphenyl phosphate of resorcinol | 10 |
| Antimony oxide | 5 |
| Properties | |
| Horizontal propagation, in inches (mm) after 30 seconds | NP |
| Horizontal Burn Test, 1/8 inch (3.175mm) specimen | ND |
| NP = No Propagation<br>ND = No Drip | |

Obviously, other modifications and variations are possible in light of the above disclosure. For instance, instead of poly(2,6-dimethyl-1,4-phenylene ether)resin, copolymers such as poly(2,6-dimethyl-co-2,3,6-trimethyl-1,4-phenylene ether) can be substituted. Instead of 1,2-bis(2,4,6-tribromophenoxy) ethane, other brominated compounds such as 1,2-bis(2,3,4,5,6-pentabromophenoxy) ethane can be used.

Optionally, the compositions can and often do also contain an additional compound selected from among those known to synergistically enhance the effect of brominated flame retardant agents, such as compounds based on antimony or molybdenum. Particular mention is made of antimony oxide, as shown. Small amounts, for example, less than 10% by weight, are usually sufficient to even further enhance the flame retardancy of the present compositions. In addition these compositions may incorporate antioxidants, other stabilizers, plasticizers, mineral fillers and glass fibers and spheres.

## Claims

**1.** A thermoplastic composition consisting of an admixture of

(a) 99 to 30 parts by weight of a polyamide resin based on 100 parts of (a) and (b) together;

(b) a polyphenylene ether resin;

(c) an elastomeric material selected from polystyrene-polybutadiene block copolymers, polystyrene-polyisoprene block copolymers, polystyrene-polybutadiene-polystyrene block copolymers, polystyrene-polyisoprene-polystyrene block copolymers, and polystyrene-polyethylene/polybutylene-polystyrene block copolymers;

(d) 1 to 20 parts by weight of an organic phosphate per 100 parts by weight of (a) and (b), and optionally

(e) a stable flame retardant brominated material with or without a synergistic agent,

(f) a filler, and

(g) one or more additives selected from plasticizers, antioxidants, stabilizers, reinforcing agents, pigments, dyes and other impact modifiers.

**2.** A composition according to Claim 1, in which (a) and (b) are present in a weight ratio in the range between 30:70 and 70:30.

**3.** A composition according to Claim 1, in which polyamide (a) contains linkages of the formula

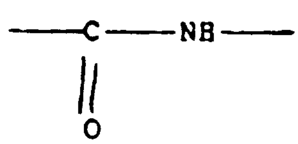

in the main polymer chain.

4. A composition according to Claim 1, in which polyamide (a) is selected from among polycaprolactam, polyundecanolactam and polyhexamethylene adipamide.

5. A composition according to Claim 1, in which polyphenylene ether (b) is a homo- or copolymer having units of the formula

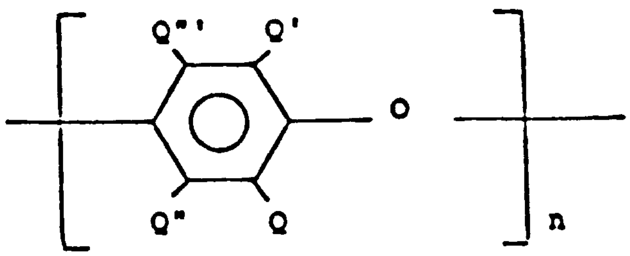

wherein Q, Q', Q'', Q''' are independently selected from the group consisting of hydrogen, halogen, hydrocarbon radicals, halohydrocarbon radicals, hydrocarbonoxy radicals, and halohydrocarbonoxy radicals; and n represents the total number of monomer units and is an integer at least about 20.

6. A composition according to Claim 1, in which component (b) is poly(2,6-dimethyl-1,4-phenylene) ether.

7. A composition according to Claim 1, in which component (d) has the formula

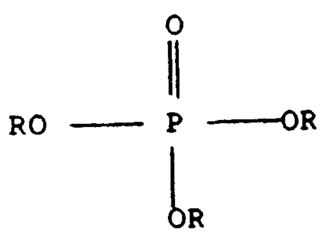

wherein R is the same or different and can be alkyl, cycloalkyl, aryl, alkyl substituted aryl, halogen substituted aryl, aryl substituted alkyl, halogen, and combinations or any of the foregoing, provided at least one R is aryl.

8. A composition according to Claim 1, in which (d) is triphenyl phosphate.

9. A composition according to Claim 8, in which the triphenyl phosphate is isopropylated.

10. A composition according to Claim 1, in which component (d) is a di- or polyfunctional compound or polymer having the formula

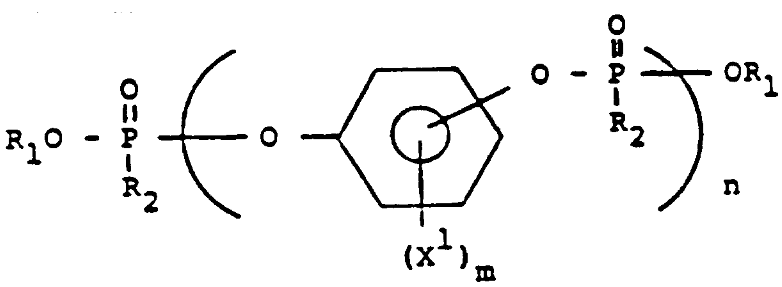,

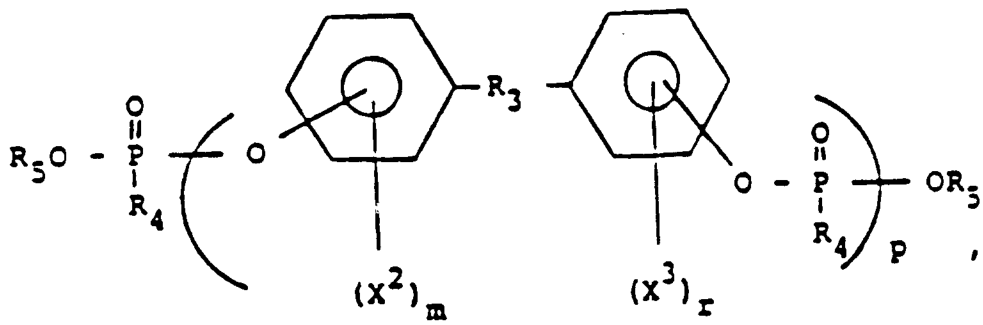

, or

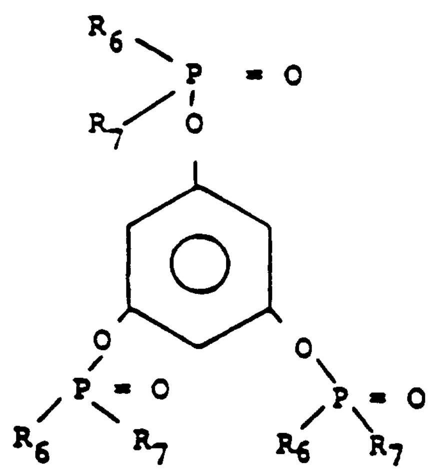

and mixtures thereof, wherein $R_1$, $R_3$ and $R_5$ are, independently, hydrocarbon; $R_2$, $R_4$, $R_6$ and $R_7$ are, independently, hydrocarbon or hydrocarbonoxy; $X^1$, $X^2$ and $X^3$ are halogen; m and r are 0 or integers from 1 to 4, and n and p are from 1 to 30.

**11.** A composition according to Claim 10, in which component (d) is bis diphenyl phosphate of resorcinol.

**12.** A composition according to Claim 10, in which component (d) is bis diphenyl phosphate of hydroquinone.

**13.** A composition according to Claim 10, in which component (d) is bis diphenyl phosphate of bisphenol-A.

**14.** A composition according to Claim 1, in which the brominated material, (e) is a bisphenoxy alkane of the formula

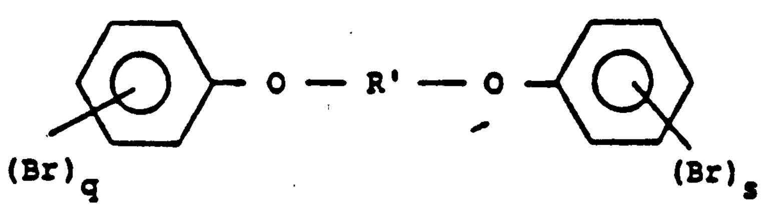

where R' is alkylene, straight or branched, having from 1 to about 10 carbon atoms, and q and s represent the total number of bromine atoms on each ring and are, independently, integers from 1 to 5.

**15.** A composition according to Claim 14, in which (e) is 1,2-bis(2,4,6-tribromophenoxy) ethane or 1,2-bis-(2,3,4,5,6-pentabromophenoxy) ethane.

**16.** A composition according to Claim 1, in which component (e) is an aromatic polycarbonate having units of the formula

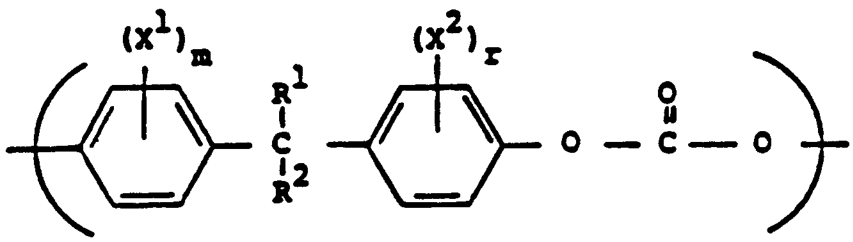

in which $R^1$ and $R^2$ are hydrogen, (lower) alkyl or phenyl, $X^1$ and $X^2$ are bromo or chloro, and m and r are from 1 to 4, and units of the formula

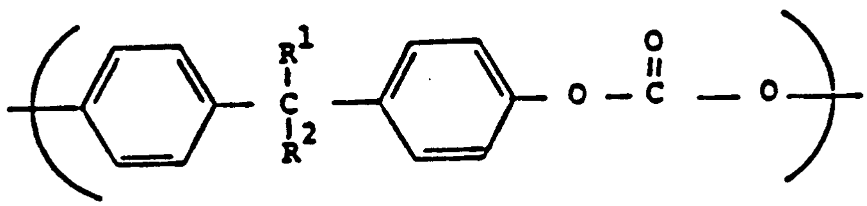

in which $R^1$ and $R^2$ are as defined above.

**17.** A composition according to claim 1, in which (e) is a tetrabisphenol-A oligomeric polycarbonate.

**18.** A composition according to claim 1, in which the synergistic agent is an antimony compound.

**19.** A composition according to claim 18, in which the antimony compound is antimony oxide.

**Patentansprüche**

**1.** Thermoplastische Zusammensetzung, bestehend aus einer Mischung von:
(a) 90 bis 30 Gewichtsteilen eines Polyamidharzes, bezogen auf 100 Gewichtsteile von (a) und (b) zusammen;
(b) einem Polyphenylenetherharz;
(c) einem elastomeren Material, ausgewählt aus Polystyrol-Polybutadienblockcopolymeren, Polyisopren-Polybutadienblockcopolymeren, Polystyrol-Polybutadien-Polystyrolblockcopolymeren, Polystyrol-Polyisopren-Polystyrolblockcopolymeren und Polystyrol/Polybutylen-Polystyrolblockcopolymeren;
(d) 1 bis 20 Gewichtsteilen eines organischen Phosphats pro 100 Gewichtsteile von (a) und (b), und wahlweise
(e) einem stabilen flammhemmenden bromierten Material mit oder ohne synergistischem Mittel;
(f) einem Füllstoff, und
(g) einem oder mehreren Zusatzstoffen, ausgewählt aus Weichmachern, Antioxidantien, Stabilisatoren, Verstärkungsmitteln, Pigmenten, Farbstoffen und anderen Schlagzähmachern.

**2.** Zusammensetzung nach Anspruch 1, in welcher (a) und (b) in einem Gewichtsverhältnis im Bereich zwischen 30:70 und 70:30 anwesend sind.

**3.** Zusammensetzung nach Anspruch 1, in welcher das Polyamid (a) Bindungen der Formel

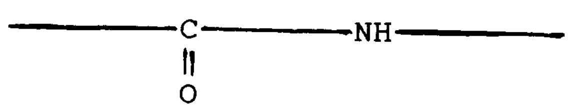

in der Hauptpolymerkette aufweist.

4. Zusammensetzung nach Anspruch 1, in welcher das Polyamid (a) ausgewählt ist aus Polycaprolactam, Polyundecanolactam und Polyhexamethylenadipinsäureamid.

5. Zusammensetzung nach Anspruch 1, in welcher der Polyphenylenäther (b) ein Homo- oder Copolymer mit Einheiten der Formel

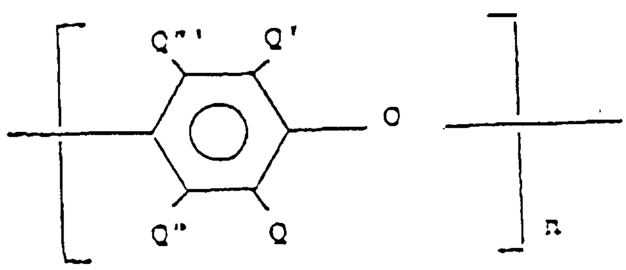

ist, worin Q, Q', Q'', Q''' unabhängig voneinander ausgewählt sind aus der Gruppe, bestehend aus Wasserstoff, Halogen, Kohlenwasserstoffresten, Halogenkohlenwasserstoffresten, Kohlenwasserstoffoxyresten und Halogenkohlenwasserstoffoxyresten, und n die gesamte Zahl der Monomereinheiten darstellt und eine ganze Zahl von wenigstens etwa 20 ist.

6. Zusammensetzung nach Anspruch 1, in der der Bestandteil (b) Poly(2,6-dimethyl-1,4-phenylen)-äther ist.

7. Zusammensetzung nach Anspruch 1, in welcher der Bestandteil (d) die Formel hat:

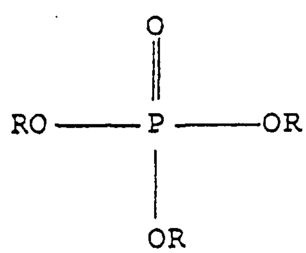

worin die R-Reste gleich oder unterschiedlich sind und Alkyl, Cycloalkyl, Aryl, alkylsubstitutiertes Aryl, halogensubstituiertes Aryl, arylsubstituiertes Alkyl, Halogen und Kombinationen aus beliebigen der vorgenannten Stoffe sein können mit der Maßgabe, daß wenigstens ein R-Rest Aryl ist.

8. Zusammensetzung nach Anspruch 1, in welcher (d) Triphenylphosphat ist.

9. Zusammensetzung nach Anspruch 8, in welcher das Triphenylphosphat isopropyliert ist.

10. Zusammensetzung nach Anspruch 1, in welcher der Bestandteil (d) eine/ein di- oder polyfunktionelle/s Verbindung oder Polymeres mit der Formel

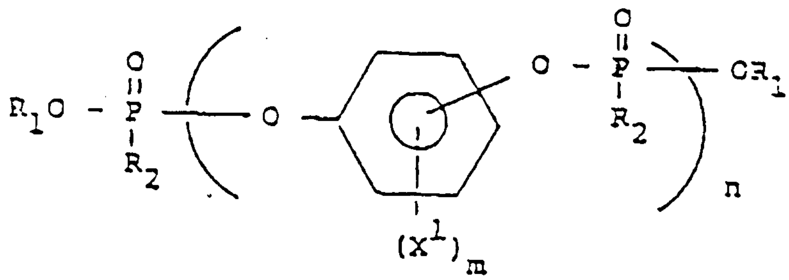

,

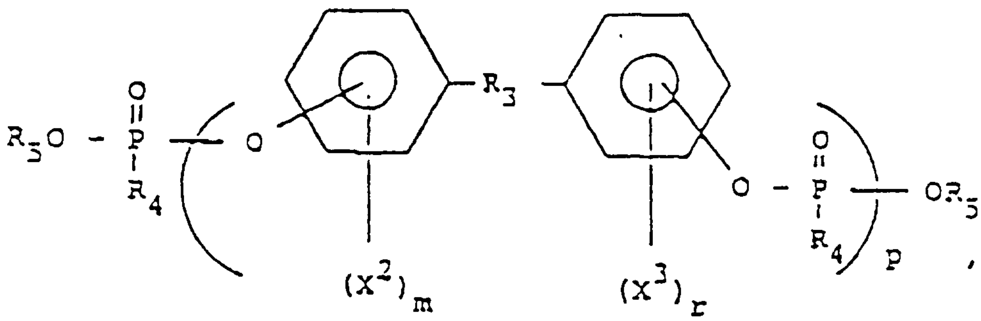

,

oder

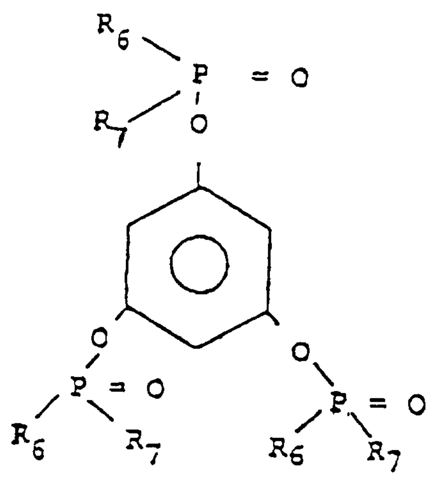

und Mischungen hiervon ist, worin die Reste $R_1$, $R_3$ und $R_5$ unabhängig voneinander Kohlenwasserstoff darstellen, die Reste $R_2$, $R_4$, $R_6$ und $R_7$ unabhängig voneinander Kohlenwasserstoff oder Kohlenwasserstoffoxy darstellen, $X^1$, $X^2$ und $X^3$ Halogen sind, m und r 0 oder ganze Zahlen von 1 bis 4 sind und n und p 1 bis 30 sind.

**11.** Zusammensetzung nach Anspruch 10, in welcher der Bestandteil (d) Bis-diphenylphosphat des Resorcins ist.

**12.** Zusammensetzung nach Anspruch 10, in welcher der Bestandteil (d) Bis-diphenylphosphat von Hydrochinon ist.

**13.** Zusammensetzung nach Anspruch 10, in welcher der Bestandteil (d) Bis-diphenylphosphat von Bisphenol-A ist.

**14.** Zusammensetzung nach Anspruch 1, in welcher das bromierte Material (e) ein Bisphenoxyalkan der Formel

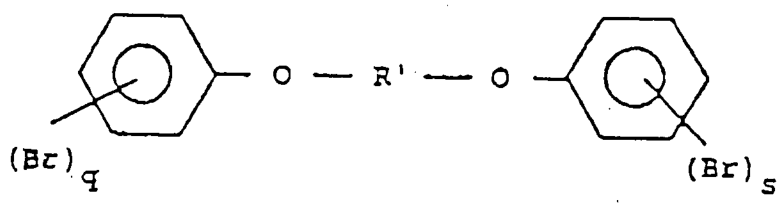

ist, worin R' Alkylen, gradkettig oder verzweigt mit 1 bis etwa 10 Kohlenstoffatomen ist und q und s die Gesamtzahl der Bromatome an jedem Ring darstellen und unabhängig voneinander ganze Zahlen von 1 bis 5 sind.

**15.** Zusammensetzung nach Anspruch 14, in welcher (e) 1,2-Bis(2,4,6-tribromphenoxy)äthan oder 1,2-Bis-(2,3,4,5,6-pentabromphenoxy)äthan ist.

**16.** Zusammensetzung nach Anspruch 1, in welcher der Bestandteil (e) ein aromatisches Polycarbonat mit Einheiten der Formel

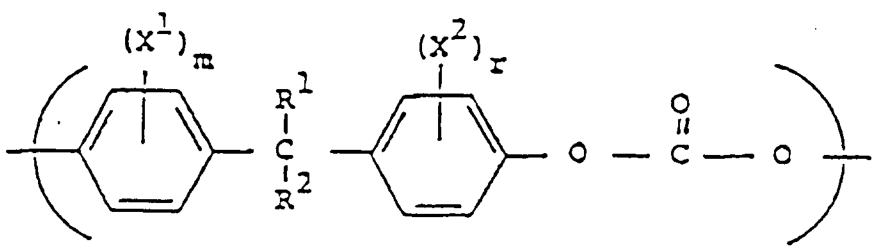

ist, in welcher $R^1$ und $R^2$ Wasserstoff, (niederes) Alkyl oder Phenyl, $X^1$ und $X^2$ Brom oder Chlor und m und r 1 bis 4 sind und Einheiten der Formel

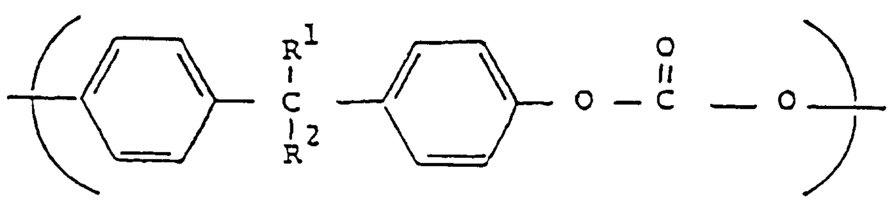

in welcher $R^1$ und $R^2$ die vorstehend gegebene Definition besitzen.

**17.** Zusammensetzung nach Anspruch 1, in welcher (e) ein Tetrabisphenol-A oligomeres Polycarbonat ist.

**18.** Zusammensetzung nach Anspruch 1, in welcher das synergistische Mittel eine Antimon-Verbindung ist.

**19.** Zusammensetzung nach Anspruch 18, in welcher die Antimon-Verbindung Antimonoxid ist.

## Revendications

1. Composition thermoplastique constituée d'un mélange de
   a) 99 à 30 parties en poids d'une résine de polyamide, sachant que la somme de (a) et (b) représente 100 parties ;
   b) une résine de poly(phénylène éther) ;
   c) un matériau élastomère choisi parmi les copolymères à blocs polystyrène-polybutadiène, les copolymères à blocs polystyrène-polyisoprène, les copolymères à blocs polystyrène-polybutadiène-polystyrène, les copolymères à blocs polystyrène-polyisoprène-polystyrène et les copolymères à blocs polystyrène-polyéthylène/polybutylène-polystyrène ;
   d) de 1 à 20 parties en poids d'un phosphate organique, pour 100 parties en poids de (a) et (b) ; et le cas échéant,
   e) un agent ignifugeant bromé stable, avec ou sans agent synergique ;
   f) une charge, et
   g) un ou plusieurs adjuvants choisis parmi les plastifiants, antioxydants, stabilisants, agents de renforcement, pigments, colorants, et autres agents modifiant la résistance au choc.

2. Composition conforme à la revendication 1, dans laquelle les constituants (a) et (b) sont présents en un rapport pondéral valant de 30/70 à 70/30.

3. Composition conforme à la revendication 1, dans laquelle le polyamide (a) comporte, dans sa chaîne principale, des chaînons de formule

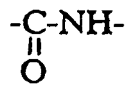

4. Composition conforme à la revendication 1, dans laquelle le polyamide (a) est choisi parmi le polycaprolactame, le polyundécanolactame et le poly(hexaméthylène adipamide).

5. Composition conforme à la revendication 1, dans laquelle le poly(phénylène éther) (b) est un homopolymère ou un copolymère, qui comporte des motifs de formule

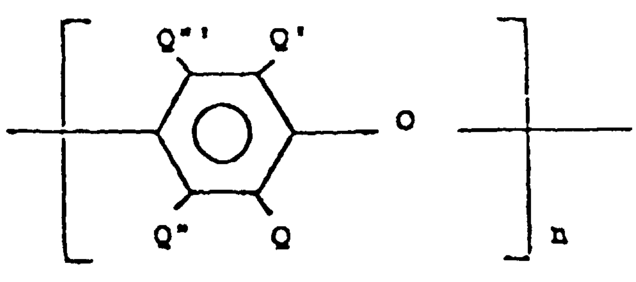

   dans laquelle Q, Q', Q'' et Q''' sont choisis, indépendamment, dans l'ensemble que constituent les atomes d'hydrogène et d'halogène et les groupes de type hydrocarboné, halogénohydrocarboné, hydrocarboné-oxy ou halogénohydrocarboné-oxy, et n est un nombre entier qui vaut au moins 20 et représente le nombre total de motifs monomères.

6. Composition conforme à la revendication 1, dans laquelle le composant (b) est un poly(2,6-diméthyl-1,4-phénylène éther).

**7.** Composition conforme à la revendication 1, dans laquelle le composant (d) possède la formule

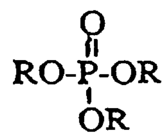

dans laquelle les symboles R représentent des groupes, identiques ou différents, qui peuvent être des groupes alkyle, cycloalkyle, aryle, aryle alkyl-substitué, halogénoaryle ou alkyle aryl-substitué, ou des atomes d'halogène, ou des combinaisons de n'importe lesquels de ces groupes et atomes , pourvu qu'au moins l'un des symboles R représente un groupe aryle.

**8.** Composition conforme à la revendication 1, dans laquelle le composant (d) est un phosphate de triphényle.

**9.** Composition conforme à la revendication 8, dans laquelle le phosphate de triphényle est isopropylé.

**10.** Composition conforme à la revendication 1, dans laquelle le composant (d) est un composé difonctionnel ou polyfonctionnel ou un polymère, de formule

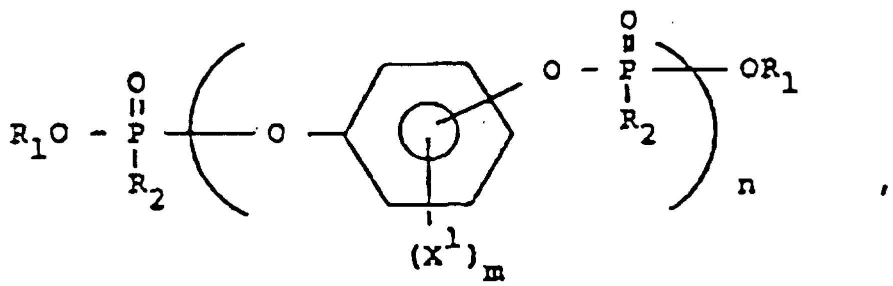

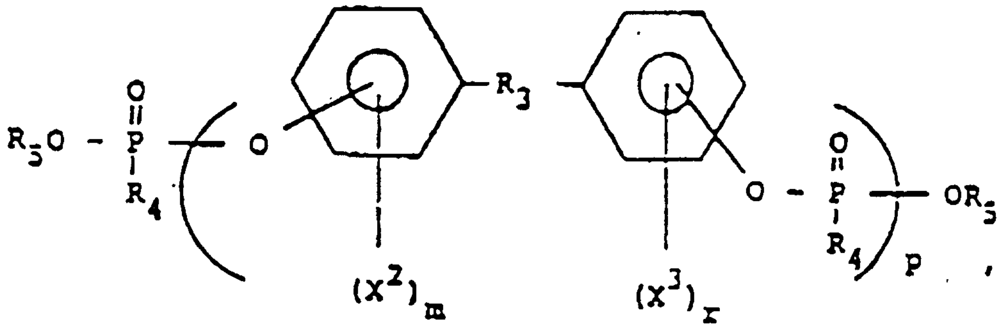

ou

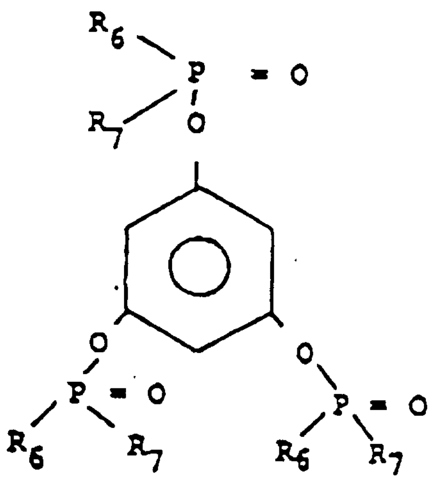

où $R_1$, $R_3$ et $R_5$ représentent indépendamment des groupes hydrocarbonés, $R_2$, $R_4$, $R_6$ et $R_7$ représentent indépendamment des groupes hydrocarbonés ou hydrocarboné-oxy, $X^1$, $X^2$ et $X^3$ représentent des atomes d'halogène, m et r valent 0 ou représentent des nombres entiers valant de 1 à 4, et n et p valent de 1 à 30,
ou un mélange de tels composés.

**11.** Composition conforme à la revendication 10, dans laquelle le composant (d) est du bis-(diphénylphosphate) de résorcinol.

**12.** Composition conforme à la revendication 10, dans laquelle le composant (d) est du bis-(diphénylphosphate) d'hydroquinone.

**13.** Composition conforme à la revendication 10, dans laquelle le composant (d) est du bis-(diphénylphosphate) de bisphénol A.

**14.** Composition conforme à la revendication 1, dans laquelle le composant bromé (e) est un bis(phénoxy)-alcane de formule

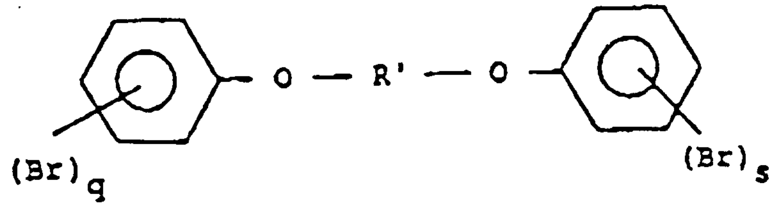

dans laquelle R' représente un groupe alkylène linéaire ou ramifié, comportant de 1 à environ 10 atomes de carbone, et q et s représentent les nombres totaux d'atomes de brome portés par chaque cycle, ces nombres étant des nombres entiers valant indépendamment de 1 à 5.

**15.** Composition conforme à la revendication 14, dans laquelle le composant (e) est du 1,2-bis(2,4,6-tribromophénoxy)éthane ou du 1,2-bis(2,3,4,5,6-pentabromophénoxy)éthane.

**16.** Composition conforme à la revendication 1, dans laquelle le composant (c) est un polycarbonate aromatique comportant des motifs de formule

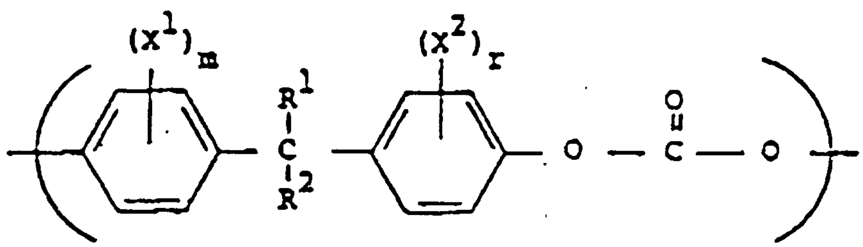

dans laquelle $R^1$ et $R^2$ représentent des atomes d'hydrogène ou des groupes alkyle inférieur ou phényle, $X^1$ et $X^2$ représentent des atomes de brome ou de chlore, et m et n valent de 1 à 4,
et des motifs de formule

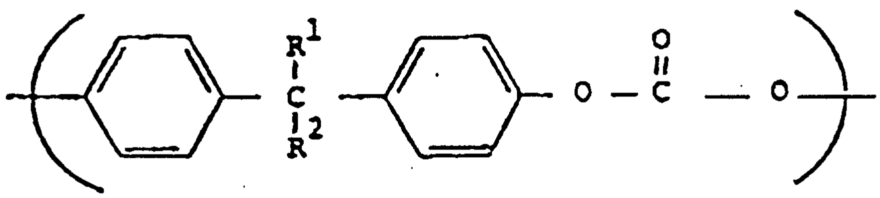

dans laquelle $R^1$ et $R^2$ ont les significations indiquées ci-dessus.

**17.** Composition conforme à la revendication 1, dans laquelle le composant (e) est un polycarbonate oligomère de tétra(bisphénol A).

**18.** Composition conforme à la revendication 1, dans laquelle l'agent synergique est un composé de l'antimoine.

**19.** Composition conforme à la revendication 18, dans laquelle le composé de l'antimoine est un oxyde d'antimoine.